(19) **Europäisches Patentamt**

**European Patent Office**

**Office européen des brevets**

(11) Veröffentlichungsnummer : **0 391 943 B1**

(12) **EUROPÄISCHE PATENTSCHRIFT**

(45) Veröffentlichungstag der Patentschrift :
**02.01.92 Patentblatt 92/01**

(21) Anmeldenummer : **89900033.5**

(22) Anmeldetag : **12.11.88**

(86) Internationale Anmeldenummer :
**PCT/EP88/01028**

(87) Internationale Veröffentlichungsnummer :
**WO 89/04783 01.06.89 Gazette 89/12**

(51) Int. Cl.⁵ : **B60T 8/32,** B60K 28/16,
**// G01P21/00**

(54) **VERFAHREN ZUR KORREKTUR DER DURCH RADSENSOREN ERMITTELTEN DREHGESCHWINDIGKEIT VON FAHRZEUGRÄDERN.**

(30) Priorität : **17.11.87 DE 3738914**
**15.04.88 DE 3812570**

(43) Veröffentlichungstag der Anmeldung :
**17.10.90 Patentblatt 90/42**

(45) Bekanntmachung des Hinweises auf die
Patenterteilung :
**02.01.92 Patentblatt 92/01**

(84) Benannte Vertragsstaaten :
**AT CH DE FR GB LI SE**

(56) Entgegenhaltungen :
**EP-A- 0 133 381**
**FR-A- 2 228 642**
**US-A- 4 032 197**

(73) Patentinhaber : **ROBERT BOSCH GmbH**
**Postfach 10 60 50**
**W-7000 Stuttgart 10 (DE)**

(72) Erfinder : **HAAS, Hardy**
**Memelweg 7**
**W-7141 Schwieberdingen (DE)**
Erfinder : **MEISSNER, Manfred**
**Im Eichrain 33**
**W-7145 Unterriexingen (DE)**

Erfinder : **SIGL, Alfred**
**Waldeck 8**
**W-7126 Sersheim (DE)**
Erfinder : **SCHLICHENMAIER, Andreas**
**Zaberfeldstra e 74**
**W-7129 Zaberfeld 2 (DE)**
Erfinder : **SCHWABE, Ulrich**
**Ditzenbrunnerstra e 60**
**W-7257 Ditzingen (DE)**
Erfinder : **GÜTTLER, Hans**
**Heumadenstra e 5**
**W-7101 Unterheinriet (DE)**
Erfinder : **LEIBBRAND, Norbert**
**Berliner Ring 65**
**W-7130 Mühlacker (DE)**
Erfinder : **BRÄUNINGER, Jürgen**
**Kaiserslauterer Stra e 60**
**W-7000 Stuttgart 31 (DE)**
Erfinder : **WÖRNER, Dieter**
**Blankensteinstra e 5**
**W-7127 Pleidelsheim (DE)**
Erfinder : **SCHÄFER, Jochen**
**Belchenweg 18**
**W-7140 Ludwigsburg 11 (DE)**
Erfinder : **BEDRNA, Frank**
**Pforzheimer Stra e 7**
**W-7145 Schönbühlhof (DE)**

(74) Vertreter : **Kammer, Arno, Dipl.-Ing.**
**ROBERT BOSCH GmbH, Zentralabteilung**
**Patente, Postfach 10 60 50**
**W-7000 Stuttgart 10 (DE)**

Anmerkung : Innerhalb von neun Monaten nach der Bekanntmachung des Hinweises auf die Erteilung des europäischen Patents kann jedermann beim Europäischen Patentamt gegen das erteilte europä- ische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patent- übereinkommen).

## Beschreibung

### Stand der Technik

Es ist bekannt, die Geschwindigkeit von Fahrzeugrädern mittels Sensoren zu messen und die gemessenen Geschwindigkeiten zur Regelung des Radschlupfs zu verwenden. Radschlupf kann z.B. durch Überbremsen von Fahrzeugrädern (Bremsschlupf), durch zu großes Antriebsmoment (Antriebsschlupf) oder auch durch das Schleppmoment des Motors bei geringem Reibbeiwert zwischen Straße und Reifen zustande kommen. Durch Einwirken auf den Bremsdruck wird bei einen ABS der Bremsschlupf geregelt; durch Einwirken auf das Antriebsmoment und/oder auf die Bremse wird bei dar Antriebsschlupfregelung (ASR) der Antriebsschlupf geregelt; bei der Motorschleppmomentregelung wird durch Einwirken auf den Antrieb der Schlupf geregelt.

Die Reifendurchmesser eines Kraftfahrzeugs können voneinander abweichen, wodurch an den einzelnen Rädern unterschiedliche Radgeschwindigkeiten gemessen werden. Hierdurch kann es bei den oben genannten Regelungen zu Fehlregelungen kommen.

Aus der EP-A2-0133381 ist es bekannt, während der Fahrt unterschiedliche Reifendurchmesser durch Differenzbildung von Radgeschwindigkeitssignalen zu erkennenund die gemessenen Geschwindigkeitswerte von Rädern mit abweichenden Reifendurchmessern zu korrigieren. Dann können die erhaltenen Werte zwecks Regelung miteinander in Beziehung gesetzt werden.

### Vorteile der Erfindung

Die erfindungsgemäße Ermittling der Fahrzeuggeschwindigkeit garantiert eine sehr gute Annäherung an die tatsächliche Situation.

Vorzugsweise wird die Erkennung unterschiedlicher Durchmesser der Räder und die Korrekturerrechnung dann vorgenommen, wenn nicht gebremst wird, keine der genannten Regelungen in Funktion ist, keine Kurve durchfahren wird (Lenkwinkelsignal klein, oder Querbeschleunigung klein, oder Drehgeschwindigkeiten an den Rädern einer Achse etwa gleich), die Fahrzeugbeschleunigung oder - Verzögerung gering ist, die Räder keine oder nur eine geringe Beschleunigung oder Verzögerung aufweisen und/oder wenigstens nur ein geringes Motormoment auf die angetriebenen Räder gekoppelt wird. Letzteres kann durch ein geringes Motorausgangnmoment, oder keine Verbindung zwischen Motor und angetriebenen Rädern oder bei Automatikgetriebe "Fahrstufe N eingelegt" signalisiert werden. Die Nullmomentenermittlung ist bei ABS-Steuergeräten nicht durch DKV- und $n_{mot}$ - Abfrage möglich, da es sich hierbei um ASR-spezifische Informationen handelt.

Bei ABS-Steuergeräten kann stattdessen von einer vorhandenen Einspritzanlage (Motronic, Jetronic o.ä) die Leitung zur Kraftstoffverbrauchsanzeige (KVA) eingelesen werden. Die Werte sind etwa proportional zur Einspritzzeit $T_i$. Aus $T_i$ bzw. KVA kann man bei Kenntis der entsprechenden Motorkennlinien das Motormoment bestimmen. Die obigen Kriterien können in verschiedenen Kombinationen zur Erkennung des schlupffreien Radlaufs herangezogen werden. Auch ist es möglich, die Messung und Korrektur nur in einem mittleren Geschwindigkeitsbereich vorzunehmen.

Die Änderung des dynamischen Reifendurchmessers ist eine nichtlineare Funktion der Fahrzeuggeschwindigkeit. Um eine nichtlineare Korrektur vornehmen zu können, kann man sich die Korrektur durch geschwindigkeitsabhängige Korrekturwerte über den gesamten Geschwindigkeitsbereich vorstellen.

Anhand der Zeichnung werden Ausführungsbeispiele der Erfindung erläutert.

Es zeigen

Fig. 1 zeigt ein Blockschaltbild zur Durchführung des erfindungsgemäßen Verfahrens

Fig. 2 ein Flußdiagramm zur Durchführung des Verfahrens

Fig. 3 und 4 eine Tabelle bzw. ein Diagramm zur Erläuterung

Fig. 5 ein Blockschaltbild eines weiteren Ausführungsbeispiels

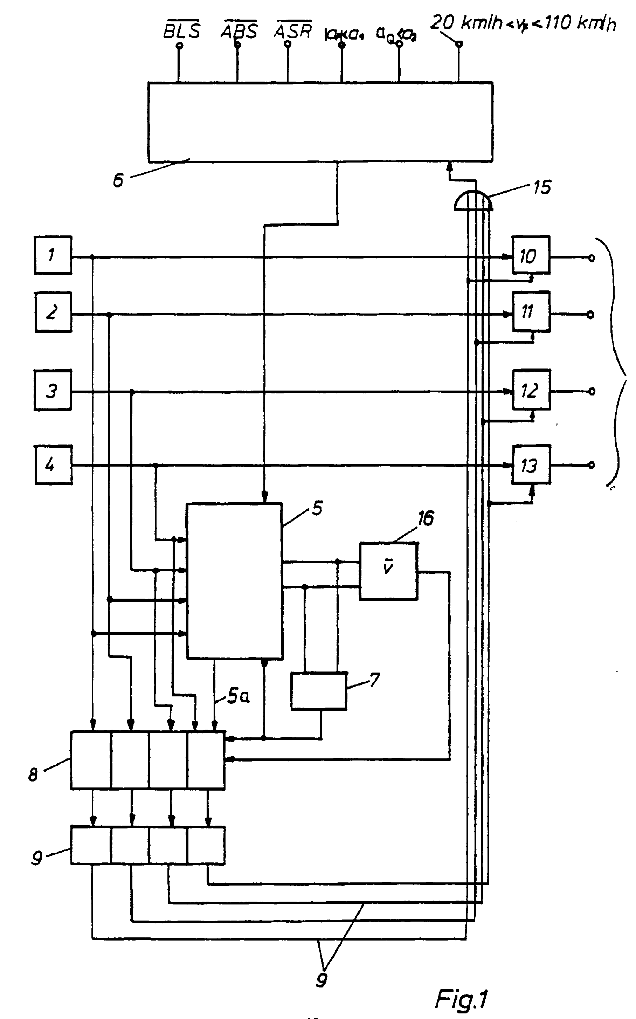

In Fig. 1 sind mit 1 - 4 vier den vier Rädern eines Kraftfahrzeugs zugeordnete Geschwindigkeitssensoren bezeichnet. Diese liefern Radgeschwindigkeiten $V_1$ - $V_4$ an einem Block 5. Bin weiterer Block 6 aktiviert den Block 5, wenn, wie hier angenommen nicht gebremst wird ($\overline{\mathrm{BLS}}$), ABS und ASR nicht in Funktion sind ($\overline{\mathrm{ABS}}$ und $\overline{\mathrm{ASR}}$), die Fahrzeugbeschleunigung oder verzögerung kleiner einem vorgegebenen Betrag $a_1$ ist, die Querbeschleunigung $a_Q$ kleiner als ein Betrag $a_2$ ist und sich das Fahrzeug zwischen 20 und 110 Km/h bewegt.

Sind diese Bedingungen erfüllt, so wird schlupffreie fahrt unterstellt. Es sei hier unterstellt, daß das Kriterium $a_Q < a_2$ erst später auf ein Zusatzsignal hin zugeschaltet wird.

Im Block 5 werden nun fortlaufend die Differenzen

$\Delta V_1 = \quad /(V_1 - V_2)/$

$\Delta V_2 = \quad /(V_1 - V_3)/$

$\Delta V_3 = \quad /(V_1 - V_4)/$

EP 0 391 943 B1

$$\Delta V_4 = /(V_2 - V_3)/$$
$$\Delta V_5 = /(V_2 - V_4)/$$
$$\Delta V_6 = /(V_3 - V_4)/$$

gebildet und die geringste Differenz $\Delta V$ min festgestellt. Aus den Geschwindigkeiten z.B. $V_2$ und $V_3$ dieser Differenz $\Delta V$ min = $\Delta V_4$ wird dann in einen Block 16 der Mittelwert

$$\overline{V} = \frac{V_2 + V_3}{2}$$

gebildet.

Vorzugsweise wird im Block 5 ein Mittelwert $\Delta V$ der Differenz über eine Vielzahl von aufeinander folgenden Messungen ermittelt. Vorzugsweise ist der Mittelwert ein gewichteter Mittelwert, der gemäß folgender Beziehung ermittelt wird:

$$\overline{\Delta V} = \frac{m \cdot \overline{\Delta V}(t-1) + \Delta V(t)}{m + 1}$$

Diese Beziehung bedeutet, daß jeweils der aus m Mittelwertbildungen (m Konstant und z. B. 1000) zuletzt (Zeitpunkt t-1) erhaltene mittelwert $\overline{\Delta V}(t-1)$ mit dem Faktor m versehen wird, hierzu der neu (Zeitpunkt t) ermittelte Differenzwert $\Delta V(t)$ addiert wird und die Summe durch (m+1) dividiert wird. $\overline{\Delta V}$ ist bei Rechnerstart 0.

Gemäß der sich hieraus ergebenden kleinsten Differenz $\Delta V$ min werden die Radgeschwindigkeiten mit der geringsten Abweichung voneinander ausgewählt und der oben genannte Mittelwert $\overline{V}$ in Block 16 gebildet.

Ein Vergleicher 7 überprüft, ob die Differenz der beiden ausgewählten Räder kleiner als ein vorgegebener Wert, z.B. kleiner 1% ist. Ist dies der Fall, so wird ein Block 8 aktiviert, andernfalls wird durch Deaktivierung des Blocks 5 die Messung neu begonnen.

Ist der Unterschied kleiner z.B. 1%, so werden im Block 8 Korrekturfaktoren

$$K_1 = \frac{\overline{V}}{V_1} \text{ und } K_4 = \frac{\overline{V}}{V_4}$$

(gemäß dem obigen Beispiel) gebildet, wobei hier die Radgeschwindigkeiten zu $\overline{V}$ in Beziehung gesetzt werden, die nicht in $\overline{V}$ eibezogen werden. Dies wird vom Block 5 über eine Leitung 5a zum Block 8 signalisiert. Aus den nacheinander erhaltenen Korrekturwerten $K_1$ und $K_4$ werden ebenfalls im Block 8 gewichtete Mittelwerte $\overline{K}_1$ und $\overline{K}_4$ gemäß der Beziehung

$$\overline{K}_1 = \frac{m\,\overline{K}_1(t-1) + K_1(t)}{m + 1}$$

$$\overline{K}_4 = \frac{m\,\overline{K}_4(t-1) + K_4(t)}{m + 1}$$

gebildet.

m ist wieder eine konstante Zahl, z. B. 1000.

$\overline{K}_i$ ist bei Rechnerstart 1.

Man kann in einem weiteren Block 9 die K Werte abspeichern und auf Plausibilität überprüfen. Es wird dabei vorausgesetzt, daß $K_i$ einen vorgegebenen Wert $K_{Grenz}$ nicht überschreiten darf, der z.B. durch den Durchmesser des Notrads gegeben ist.

Die bei dem angenommenen Beispiel ermittelten Werte $\overline{K}_1$ und $\overline{K}_4$ werden über Leitungen 9' zu Multiplikatoren 10 und 13 gegeben, in denen aus der gemessenen Geschwindigkeiten $V_1$ und $V_4$ korrigierte Geschwindigkeiten

$$V_{1K} = \overline{K}_1 V_1$$
$$V_{4K} = \overline{K}_4 V_4$$

gebildet werden. Über Klemmen 14 stehen die teilweise nicht und teilweise korrigierten Geschwindigkeitssignäl $V_{1K}$, $V_2$, $V_3$ $V_{4K}$ zur weiteren Auswertung zur Verfügung.

Man kann, wenn einmal Korrekturwerte ermittelt wurden, die Kriterien für die Korrekturermittlung verschärfen und ab dann z.B. für die Ermittlung zusätzlich noch die Geradeausfahrt zur Bedingung machen. Hierzu wird bei Bildung eines Korrektursignals $K_i$ über ein Oder-Gatter 15 der Block 1 umgeschaltet, sodaß er nunmehr nur noch bei zusätzlicher Geradeausfahrt, d. h. wenn $a_Q < a_2$ ist, den Block 5 aktiviert.

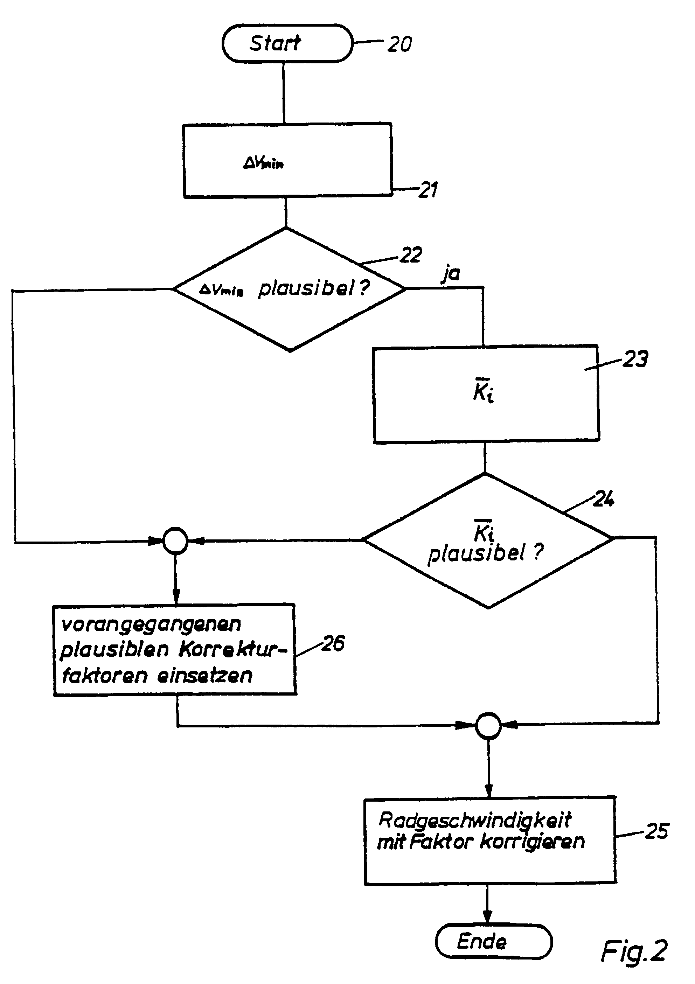

Anhand eines in Fig. 2 gezeigten Flußdiagramms wird nun ein etwas anderes Verfahren erläutert. Nach dem Start (20) wird in 21 die kleinste Differenz $\Delta V$min ermittelt und der Mittelwert $\overline{V}$ gebildet. In 22 wird geprüft, ob die ermittelten Werte plausibel sind (z.B. $\Delta V$min/$\overline{V}$ < 1%). Ist dies der Fall, so werden in 23 die Korrekturfaktoren $\overline{K}_i$ berechnet und in 24 auf Plausibilität geprüft

$$\text{(z.B. } \frac{\overline{K}(t-1) - K(t)}{\overline{K}(t-1)} < 3\%)$$

Ist dies ebenfalls der Fall, so werden in 25 die Radgeschwindigkeiten korrigiert. Wird dagegen in den Blöcken 22 oder 24 festgestellt, daß die gelieferten Werte nicht plausibel sind, so wird jeweils über 26 der letzte vorangegangene plausible Korrekturwert zur Korrektur benutzt.

3

Man kann bei schlupffreier Fahrt die radbezogenen Korrekturwerte $K_i$ gemäß der Beziehung

$$K_i = \frac{V_F}{V_i} \text{ ermitteln,}$$

wobei $V_i$ die Radgeschwindigkeit das i ten Rads und $K_i$ dessen Kortekturfaktor ist. Die Werte für $K_i$ werden dann abgespeichert und die gemessene Radgeschwindigkeit fortlaufend mit dem gespeicherten Korrekturwert $K_i$ korrigiert ($V_{i\,korr} = K_i \cdot V_i$).

Bei Anwendung der erfindungsgemäßen Korrektur ergeben sich bei Änderung der Reifengröße, bei Auflegen von Schneeketten, bei Verwendung eines Notrades usw. keine Probleme in den Regelungssystemen.

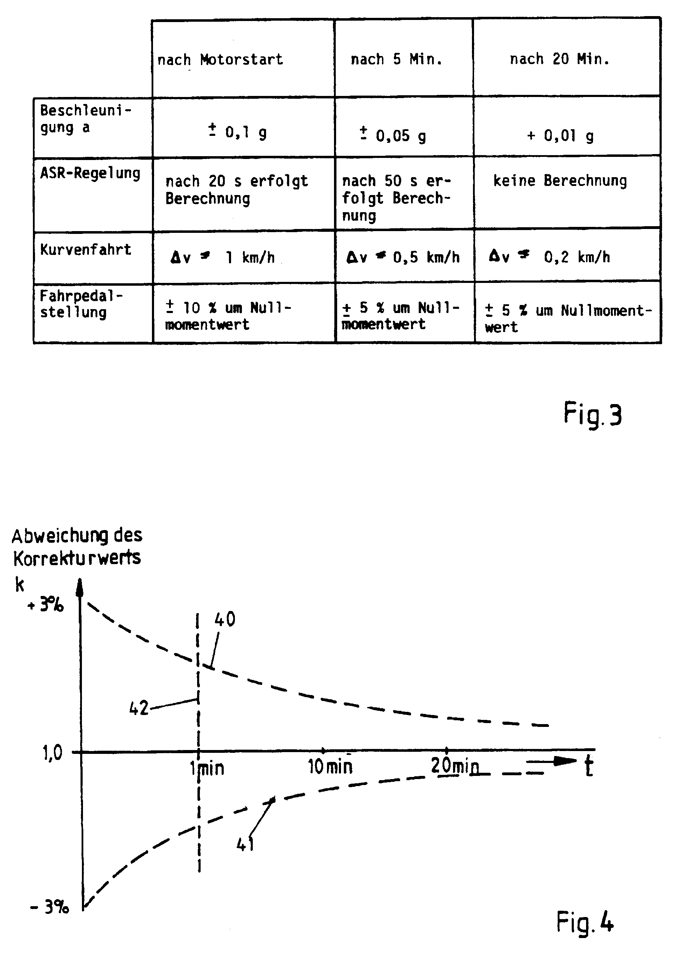

Man kann die Bedingungen für die Ermittlung der Fahrzeuggeschwindigkeit (z.B. die Grenzwerte für die Beschleunigung, für den Lenkwinkel oder die Querbeschleunigung oder die Differenz der Radumdrehungen einer Achse, oder für das kleine Motormoment in Abhängigkeit von der Zeit seit dem Start oder in Abhängigkeit von der Zahl der Korrekturzyklen seit dem Start verschärfen. Dies ist in der Tabelle der Fig. 3 gezeigt. Die Kurvenfahrt wird dort durch die Geschwindigkeitsdifferenz $\Delta V$ der gelenkten Räder definiert und das Motornullmoment durch die Fahrpedalstellung um den Nullmomentwert.

Da die Abweichung eines Rads so groß sein kann, daß schon von Anfang an ASR-Betrieb herrscht, könnte es vorkommen, daß es zu keiner Ermittlung L eines Korrekturfaktors kommt. Deshalb ist vorgesehen anfangs trotz ASR nach 20 sec den Korrekturfaktor zu ermitteln. Mit der ansteigenden Zeit T seit dem Start erhöht sich diese Wartezeit; nach z.B. 20 Minuten kann dann die Ermittlung völlig entfallen. Die Ermittlung der Fahrzeuggeschwindigkeit wird also mit der Zeit T empfindlicher gemacht.

Der Ersatz eines abgespeicherten Korrekturwerts durch einen neu ermittelten Korrekturwert wird man nur dann vornehmen, wenn die Abweichung einen Abweichungsgrenzwert überschreitet. Auch diesen kann man von der Zeit seit dem Start abhängig machen und zwar so, daß er mit der Zeit kleiner wird. Dies zeigt Fig. 4 mit den beiden Grenzwerten 40 und 41. Abgespeichert wird, wenn der neu ermittelte Korrekturwert oberhalb bzw. unterhalb dieser Grenzwerte liegt. Es ist noch ein Grenzwert der Zeit 42 eingezeichnet. Bis zum Erreichen von von 1 min. erfolgt kein Korrekturwertersatz.

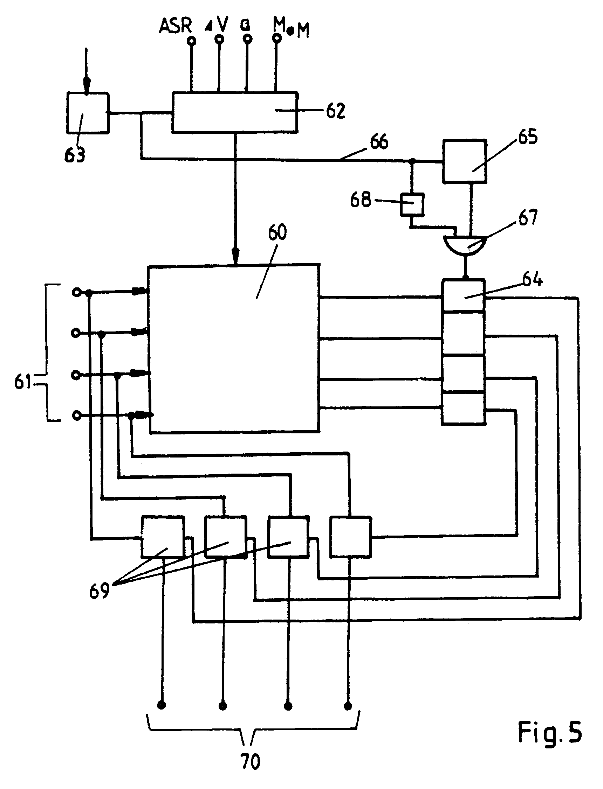

In Fig. 5 werden einem Block zur Ermittlung neuer Korrekturfaktoren über Klemmen 61 die Radgeschwindigkeit zugeführt. Der Block 60 ermittelt die Korrekturfaktoren nur, wenn ein Block 62 ihn aktiviert. Die geschieht, wenn er aus den anliegenden Signalen auf Schlupffreiheit erkennt. Die Bedingungen für die Festlegung der Schlupffreiheit können von der Zeitdauer seit Start abhängig gemacht werden (siehe Fig. 3), weshalb dem Block 62 von einem Zeitglied 63, das bei Start gesetzt wird, ein Zeitsignalzugeführt wird.

Werden im Block 60 neue Korrektufaktoren ermittelt, so werden diese dem Speicher- und Vergleichsglied 64 zugeführt. Der alte gespeicherte Korrekturwert wird jeweils durch den neuen ersetzt, wenn der neue Wert um wenigstens einen durch einen Block 65 vorgegebenen Grenzwert vom alten Wert abweicht. Dieser Grenzwert wird entsprechend Fig. 4 mit der Zeit seit dem Start variiert. (Leitung 66). Ein Grenzwertsignal und damit ein Korrekturwertvergleich wird durch ein Und-Gatter 67 verhindert, solange seit dem Start nicht eine Mindestzeit verstrichen ist, in der ein Zeitglied 68 kein Signal abgibt.

Mit den letztlich im Glied 64 gespeicherten Korrekturfaktoren werden die laufend ermittelten Radgeschwindigkeiten in Multiplikatoren 69 multipliziert. An Klemmen 70 stehen dann die korrigierten Radgeschwindigkeiten zur Auswertung in einem ABS oder ASR zur Verfügung.

## Patentansprüche

1. Verfahren zur Korrektur der durch Radsensoren ermittelten Drehgeschwindigkeiten von Fahrzeugrädern, bei dem in Zeiträumen ohne Radschlupf die Fahrzeuggeschwindigkeit $V_F$ ermittelt wird, bei dem aus den Abweichungen der Drehgeschwindigkeiten der Räder von dieser Fahrzeuggeschwindigkeit Korrekturwerte K ermittelt werden und bei dem nachfolgend die Drehgeschwindigkeiten der Räder mit diesen Korrekturwerten korrigiert werden, dadurch gekennzeichnet, daß zur Ermittlung der Fahrzeuggeschwindigkeit durch paarweises Vergleichen der Drehgeschwindigkeiten der Räder das Radpaar mit der geringsten Geschwindigkeitsdifferenz ermittelt wird und daß die Radgeschwindigkeiten dieser Räder gemittelt werden.

2. Verfahren nach Anspruch 1, dadurch gekennzeichnet, daß die Ermittlung der Fahrzeuggeschwindigkeit in Zeiträumen vorgenommen wird, in denen keine Schlupfregelung (ABS oder ASR oder Motorschleppmomentenregelung) erfolgt.

3. Verfahren nach Anspruch 1, oder 2, dadurch gekennzeichnet, daß die Ermittlung der tatsächlichen Fahrzeuggeschwindigkeit in Zeiträumen vorgenommen wird, in denen nicht gebremst wird.

4. Verfahren nach einem der Ansprüche 1 bis 3, dadurch gekennzeichnet, daß die Ermittlung der tatsächlichen Fahrzeuggeschwindigkeit in Zeiträumen vorgenommen wird, in denen der Motor ein geringes Moment

EP 0 391 943 B1

abgibt.

5. Verfahren nach einem der Ansprüche 1 bis 4, dadurch gekennzeichnet, daß die Ermittlung der tatsächlichen Fahrzeuggeschwindigkeit in Zeiträumen vorgenommen wird, in denen das Fahrzeug in einem vorgegebenen Geschwindigkeitsbereich fährt.

6. Verfahren nach einem der Ansprüche 1 bis 5, dadurch gekennzeichnet, daß die Ermittlung der tatsächlichen Fahrzeuggeschwindigkeit in Zeiträumen vorgenommen wird, in denen die Radbeschleunigungen und Radverzögerungen kleiner als ein vorgegebener kleiner Vergleichswert sind.

7. Verfahren nach einem der Ansprüche 1 bis 6, dadurch gekennzeichnet, daß die Ermittlung der tatsächlichen Fahrzeuggeschwindigkeit in Zeiträumen vorgenommen wird, in denen keine Kurve durchfahren wird.

8. Verfahren nach einem der Ansprüche 1 - 7, dadurch gekennzeichnet, daß zur Feststellung der geringsten Differenz zweier Radgeschwindigkeiten der Mittelwert $\overline{\Delta V}$ einer vielzahl von nacheinander ermittelten Geschwindigkeitsdifferenzen $\Delta V$ gebildet wird.

9. Verfahren nach Anspruch 8, dadurch gekennzeichnet, daß ein gewichteter Mittelwert $\overline{\Delta V}$ der Differenzen $\Delta V$ zum Zeitpunkt t nach Maßgabe der Beziehung

$$\overline{\Delta V} = \frac{m \cdot \overline{\Delta V}(t-1) + \Delta V(t)}{m + 1} \text{ ermittelt wird,}$$

wobei m eine Konstante Zahl (Zahl der Berechnungen), und (t-1) und t aufeinanderfolgende Auswertungszeitpunkte sind.

10. Verfahren nach einem der Ansprüche 2 - 9, dadurch gekennzeichnet, daß die geringste Differenz nur verwertet wird, wenn sich die Radgeschwindigkeiten der zugehörigen Räder um weniger als ein vorgegebener kleiner Wert (z.B. 1%) voneinander unterscheiden.

11. Verfahren nach einem der Ansprüche 1 - 10, dadurch gekennzeichnet, daß die gemessenen Radgeschwindigkeiten $V_i$ der Räder nach Maßgabe der Beziehung

$$V_{Ki} = k_i \cdot V_i$$

korrigiert werden, wobei $K_i$ ein für das einzelne Rad ermittelten Korrekturfaktor und $V_{Ki}$ die korrigierte Radgeschwindigkeit für das einzelne Rad ist.

12. Verfahren nach Anspruch 11, dadurch gekennzeichnet, daß $K_i$ durch Bildung des Quotienten $K_i < \overline{V}/V_i$ ermittelt wird.

13. Verfahren nach Anspruch 11 oder 12, dadurch gekennzeichnet, daß der Korrekturwert K ein nach Maßgabe der Beziehung

$$\overline{K_i} = \frac{m \overline{K_i}(t-1) + K_i(t)}{m + 1}$$

ermittelten gewichteten Korrekturwert $\overline{K_i}$ ist, wobei m eine Konstante Zahl, (t-1) und t aufeinanderfolgende Auswertezeitpunkte und $K_i(t)$ der neu ermittelte Korrekturwert ist.

14. Verfahren nach einem der Ansprüche 11 - 13, dadurch gekennzeichnet, daß die zulässige Abweichung des Werts für $K_i$ von 1 begrenzt ist.

15. Verfahren nach einem der Ansprüche 13 oder 14, dadurch gekennzeichnet, daß die Abweichung des aktuellen Korrekturwerts $K_i(t)$ vom gewichteten Korrekturwert $\overline{K_i}(t-1)$ begrenzt ist.

16. Verfahren nach Anspruch 7, dadurch gekennzeichnet, daß die Kurvenfahrbedingung erst wirksam gemacht wird, wenn ein erster Korrekturwert nach einer Zahl von Messungen ermittelt wurde.

17. Verfahren nach einem der Ansprüche 1 - 16, dadurch gekennzeichnet, daß für jedes Rad i bei schlupffreier Fahrt

ein Korrekturwert $K_i = \dfrac{V_F}{V_i}$ ($V_i$ Radgeschwindigkeit des i ten Rads)

ermittelt und abgespeichert wird und daß anschließend die augenblicklichen Meßwerte der Radgeschwindigkeiten mit den zugehörigen Korrekturwerten korrigiert wurden.

18. Verfahren nach einem der Ansprüche 2, 4, 6 oder 7, dadurch gekennzeichnet, daß die Bedingungen für die Ermittlung der Fahrzeuggeschwindigkeit in Abhängigkeit von dem Zeitraum T seit dem Fahrzeugstart verschärft werden.

19. Verfahren nach den Ansprüchen 2 und 18, dadurch gekennzeichnet, daß bei einer Schlupfregelung (insb. bei ASR) bei Fahrtbeginn nach einer Wartezeit der Korrekturwert ermittelt wird und danach keine weitere Ermittlung des Korrekturwerts vorgenommen wird.

20. Verfahren nach Anspruch 19, dadurch gekennzeichnet, daß die Wartezeit in Abhängigkeit vom Zeitraum T seit dem Start erhöht wird.

21. Verfahren nach den Ansprüchen 4 und 18, dadurch gekennzeichnet, daß die Grenzen der Abweichung des Motormoments von Motornullmoment in Abhängigkeit von der Zeitdauer T verringert werden.

22. Verfahren nach den Ansprüchen 6 und 18, dadurch gekennzeichnet, daß der Vergleichswert in Abhängigkeit von dem Zeitraum T verringert wird.

23. Verfahren nach Anspruch 7 und 18, dadurch gekennzeichnet, daß der Grenzwert für die Bedingung keine Kurvenfahrt in Abhängigkeit von der Periode T verrringert wird.

24. Verfahren nach einem der Ansprüche 1 - 23, bei dem die ermittelten Korrekturwerte K abgespeichert werden, dadurch gekennzeichnet, daß ein ermittelter neuer Korrekturwert mit dem abgespeicherten Korrekturwert verglichen wird und daß der abgespeicherten Korrekturwert durch den neuen Korrekturwert ersetzt wird, wenn er um wenigstens einen vorgegebenen Grenzwert davon abweicht.

25. Verfahren nach Anspruch 24, dadurch gekennzeichnet, daß der Grenzwert mit der Zeitdauer T seit dem Fahrzeugstart verkleinert wird.

26. Verfahren nach Anspruch 24 oder 25, dadurch gekennzeichnet, daß das Ersetzen eines abgespeicherten Korrekturwerts unterhalb einer Minimalzeit seit Fahrzeugatart unterbleibt.


## Claims

1. Process for correcting the speeds of rotation of vehicle wheels determined by wheel sensors, in which the vehicle speed $V_F$ is determined in periods of time without wheel slip, in which correction values K are determined from the deviations of the speeds of rotation of the wheels from this vehicle speed, and in which the speeds of rotation of the wheels are subsequently corrected using these correction values, characterised in that, to determine the vehicle speed, the wheel pair with the lowest speed difference is determined by pairwise comparison of the speeds of rotation of the wheels, and in that the wheel speeds of these wheels are averaged.

2. Process according to Claim 1, characterised in that the determination of the vehicle speed is carried out in periods of time in which no slip control (ABS or ASR or engine drag torque control) is being effected.

3. Process according to Claim 1 or 2, characterised in that the determination of the actual vehicle speed is carried out in periods of time in which there is no braking.

4. Process according to one of Claims 1 to 3, characterised in that the determination of the actual vehicle speed is carried out in periods of time in which the engine is outputting a low torque.

5. Process according to one of Claims 1 to 4, characterised in that the determination of the actual vehicle speed is carried out in periods of time in which the vehicle is travelling in a predetermined speed range.

6. Process according to one of Claims 1 to 5, characterised in that the determination of the actual vehicle speed is carried out in periods of time in which the wheel accelerations and wheel decelerations are smaller than a predetermined small comparison value.

7. Process according to one of Claims 1 to 6, characterised in that the determination of the actual vehicle speed is carried out in periods of time in which the vehicle is not cornering.

8. Process according to one of Claims 1 - 7, characterised in that, to establish the smallest difference between two wheel speeds, the average $\overline{\Delta F}$ of a multiplicity of successively determined speed differences $\Delta V$ is formed.

9. Process according to Claim 8, characterised in that a weighted average $\overline{\Delta V}$ of the differences $\Delta V$ at instant t is determined in accordance with the relationship

$$\overline{\Delta V} = \frac{m \cdot \overline{\Delta V}\,(t{-}1\ +\ \Delta V\,(t)}{m\ +\ 1}$$

m being a constant number (number of calculations) and (t-1) and t being successive evaluation instants.

10. Process according to one of Claims 2 - 9, characterised in that the smallest difference is only used if the wheel speeds of the associated wheels differ from one another by less than a predetermined small value (e.g. 1%).

11. Process according to one of Claims 1 - 10, characterised in that the measured wheel speeds $V_i$ of the wheels are corrected in accordance with the relationship

$$V_{Ki} = K_i \cdot V_i$$

$K_i$ being a correction factor determined for the individual wheel and $V_{Ki}$ being the corrected wheel speed for the individual wheel.

12. Process according to Claim 11, characterised in that $K_i$ is determined by forming the quotient $K_i = \overline{V}/V_i$.

13. Process according to Claim 11 or 12, characterised in that the correction value K is a weighted correction value $\overline{K_i}$ determined in accordance with the relationship

$$\overline{K_i} = \frac{m\,\overline{K_i}(t{-}1)\ +\ K_i(t)}{m\ +\ 1}$$

m being a constant number, (t - 1) and t being successive evaluation instants and $K_i(t)$ being the newly determined correction value.

14. Process according to one of Claims 11 - 13, characterised in that the permissible deviation of the value

for $K_i$ from 1 is limited.

15. Process according to either of Claims 13 or 14, characterised in that the deviation of the current correction value $K_i(t)$ from the weighted correction value $\overline{K}_i(t-1)$ is limited.

16. Process according to Claim 7, characterised in that the cornering condition is only brought into effect when a first correction value has been determined after a number of measurements.

17. Process according to one of Claims 1 - 16, characterised in that a correction value $K_i = \dfrac{V_F}{V_i}$ ($V_i$ = wheel speed of the $i^{th}$ wheel) is determined and stored for each wheel i in the case of slip-free driving, and in that the instantaneous measured values of the wheel speeds are then corrected using the associated correction values.

18. Process according to one of Claims 2, 4, 6 or 7, characterised in that the conditions for the determination of the vehicle speed are tightened as a function of the period of time T since the starting of the vehicle.

19. Process according to Claims 2 and 18, characterised in that, in the case of a slip control (in particular in the case of ASR) at the beginning of travel, the correction value is determined after a waiting time and no further determination of the correction value is then carried out.

20. Process according to Claim 19, characterised in that the waiting time is increased as a function of the period of time T since the start.

21. Process according to Claims 4 and 18, characterised in that the limits of the deviation of the engine torque from zero engine torque are reduced as a function of the period of time T.

22. Process according to Claims 6 and 18, characterised in that the comparison value is reduced as a function of the period of time T.

23. Process according to Claims 7 and 18, characterised in that the limit value for the no-cornering condition is reduced as a function of the period T.

24. Process according to one of Claims 1 - 23, in which the determined correction values K are stored, characterised in that a new determined correction value is compared to the stored correction value, and in that the stored correction value is replaced by the new correction value if it deviates from it by at least a predetermined limit value.

25. Process according to Claim 24, characterised in that the limit value is reduced with the period of time T since the starting of the vehicle.

26. Process according to Claim 24 or 25, characterised in that, below a minimum time since the starting of the vehicle, the replacement of a stored correction value does not occur.


**Revendications**

1. Procédé de correction de la vitesse de rotation de roues de véhicule, déterminée par des capteurs placés au niveau des roues, selon lequel on détermine la vitesse du véhicule ($V_F$) dans des intervalles sans glissement de roues, et partant de la différence des vitesses de rotation des roues par rapport à cette vitesse du véhicule, on détermine des coefficients de correction (K) et on corrige la vitesse de rotation des roues à l'aide de ces coefficients de correction, procédé caractérisé en ce que pour déterminer la vitesse du véhicule par comparaison par paire de la vitesse de rotation des roues, on détermine la paire de roues présentant la différence de vitesse la plus faible et on fait la moyenne des vitesses de rotation de ces roues.

2. Procédé selon la revendication 1, caractérisé en ce qu'on détermine la vitesse du véhicule dans des intervalles au cours desquels il n'y a pas de réglage de glissement (ABS ou ASR ou régulation du couple-moteur en frein moteur).

3. Procédé selon la revendication 1 ou 2, caractérisé en ce qu'on détermine la vitesse effective du véhicule dans des intervalles pendant lesquels il n'y a pas de freinage.

4. Procédé selon l'une des revendications 1 à 3, caractérisé en ce qu'on détermine la vitesse réelle du véhicule dans des intervalles pendant lesquels le moteur fourni un faible couple.

5. Procédé selon l'une des revendications 1 à 4, caractérisé en ce qu'on détermine la vitesse réelle du véhicule dans des intervalles pendant lesquels le véhicule se déplace dans une plage prédéterminée de vitesse.

6. Procédé selon l'une des revendications 1 à 5, caractérisé en ce qu'on détermine la vitesse réelle du véhicule dans des intervalles pendant lesquels les accélérations et décélérations des roues sont inférieures à une faible valeur de comparaison prédéterminée.

7. Procédé selon l'une des revendications 1 à 6, caractérisé en ce qu'on détermine la vitesse réelle du véhicule dans des intervalles pendant lesquels le véhicule ne circule pas en courbe.

8. Procédé selon l'une des revendications 1 à 7, caractérisé en ce que pour déterminer la plus faible différence de deux vitesses de roues, on forme la valeur moyenne $\overline{\Delta V}$ d'un grand nombre de différences de vitesse $\Delta V$ déterminé successivement.

9. Procédé selon la revendication 8, caractérisé en ce qu'on détermine une valeur moyenne $\overline{\Delta V}$ des différences $\Delta V$ à l'instant t selon la relation :

$$\overline{\Delta V} \;=\; \frac{m \cdot \overline{\Delta V}\,(t-1) \;+\; \Delta V\,(t)}{m + 1}$$

dans laquelle m est un nombre constant (nombre de calculs) et (t-1) et t sont des instants d'exploitation successifs.

10. Procédé selon l'une des revendications 2-9, caractérisé en ce qu'on exploite la plus faible différence que si les vitesses des roues correspondantes ne se distinguent l'une des autres que d'une manière inférieure à une faible valeur (par exemple 1 %).

11. Procédé selon l'une des revendications 1-10, caractérisé en ce qu'on corrige la vitesse mesurée ($V_i$) des roues selon la relation :

$$V_{Ki} \;=\; K_i \cdot V_i$$

($K_i$) étant un coefficient de correction déterminé pour la roue correspondante et ($V_{Ki}$) étant la vitesse de roues, corrigée de la roue correspondante.

12. Procédé selon la revendication 11, caractérisé en ce qu'on détermine ($K_i$) en formant le quotient $K_i = \overline{V}/V_i$.

13. Procédé selon la revendication 11 ou 12, caractérisé en ce qu'on détermine le coefficient de correction (K) selon la relation :

$$\overline{K_i} \;=\; \frac{m\,\overline{K_i}\,(t-1) \;+\; K_i\,(t)}{m + 1}$$

avec les valeurs de correction pondérées ($\overline{K_i}$) dont on a fait la moyenne, m étant un nombre constant, (t-1) et t étant des instants d'exploitation successifs et ($K_i(t)$) étant la nouvelle valeur de correction obtenue.

14. Procédé selon l'une des revendications 11-13, caractérisé en ce que la déviation autorisée de la valeur de ($K_i$) par rapport à 1 est limitée.

15. Procédé selon l'une des revendications 13 ou 14, caractérisé en ce que la déviation de la valeur de correction instantanée ($K_i(t)$) par rapport à la valeur de correction pondérée ($\overline{K_i}(t-1)$) est limitée.

16. Procédé selon la revendication 7, caractérisé en ce que les conditions de déplacement en courbe ne sont mises en oeuvre que lorsqu'on a déterminé une première valeur de correction après un certain nombre de mesures.

17. Procédé selon l'une des revendications 1-16, caractérisé en ce que pour chaque roue (i), en cas de déplacement sans glissement, on détermine une valeur de correction $K_i = \dfrac{V_F}{V_i}$ ($V_i$ vitesse de la roue i) et on inscrit cette valeur en mémoire, puis on corriger les valeurs de mesure instantanées de la vitesse des roues avec les valeurs de correction correspondantes.

18. Procédé selon l'une des revendications 2, 4, 6, 7, caractérisé en ce qu'on accentue les conditions pour déterminer la vitesse du véhicule en fonction du temps (T) à partir du démarrage du véhicule.

19. Procédé selon l'une des revendications 2 et 18, caractérisé en ce que dans le cas d'un réglage de glissement (notamment dans le système ASR) au début du déplacement, on détermine par moyenne la valeur de correction après un temps d'attente, puis on n'effectue plus d'autres moyennes pour la valeur de correction.

20. Procédé selon la revendication 19, caractérisé en ce que le temps d'attente est augmenté à partir du démarrage en fonction du temps (T).

21. Procédé selon les revendications 4 et 18, caractérisé en ce qu'on réduit les limites de la déviation du couple moteur par rapport au couple nul du moteur en fonction de la durée (T).

22. Procédé selon les revendications 6 et 18, caractérisé en ce qu'on réduit la valeur de comparaison en fonction du temps (T).

23. Procédé selon les revendications 7 et 18, caractérisé en ce qu'on réduit la valeur limite pour la condition de l'absence de déplacement en courbe en fonction de la période (T).

24. Procédé selon l'une des revendications 1-23, selon lequel on inscrit en mémoire les valeurs de correction (K) dont on a fait la moyenne, caractérisé en ce qu'une nouvelle valeur de correction dont on a fait la moyenne est comparée à la valeur de correction inscrite en mémoire et cette valeur de correction inscrite en mémoire est remplacée par la nouvelle valeur de correction si cette nouvelle valeur diffère de la précédente d'au moins une valeur limite prédéterminée.

25. Procédé selon la revendication 24, caractérisé en ce que la valeur limite diminue avec la durée (T) mesurée à partir du départ.

26. Procédé selon la revendication 24 ou 25, caractérisé en ce que la valeur de correction inscrite en mémoire n'est pas remplacée pendant un temps minimum compté à partir du départ du véhicule.

Fig.1

Fig.2

|  | nach Motorstart | nach 5 Min. | nach 20 Min. |
|---|---|---|---|
| Beschleuni-gung a | $\pm$ 0,1 g | $\pm$ 0,05 g | + 0,01 g |
| ASR-Regelung | nach 20 s erfolgt Berechnung | nach 50 s er-folgt Berech-nung | keine Berechnung |
| Kurvenfahrt | $\Delta v \approx$ 1 km/h | $\Delta v \approx$ 0,5 km/h | $\Delta v \approx$ 0,2 km/h |
| Fahrpedal-stellung | $\pm$ 10 % um Null-momentwert | $\pm$ 5 % um Null-momentwert | $\pm$ 5 % um Nullmoment-wert |

Fig. 3

Fig. 4

Fig. 5